# EUROPÄISCHE PATENTSCHRIFT

(11) **EP 0 780 031 B1**
(45) Veröffentlichungstag und Bekanntmachung des Hinweises auf die Patenterteilung: **04.11.1998**
(21) Anmeldenummer: 95928947.1
(22) Anmeldetag: 17.08.1995
(51) Int. Cl.: H02H 7/08

(54) **SCHALTUNG ZUM BETREIBEN EINES ELEKTROMOTORS**
CIRCUIT FOR OPERATING AN ELECTRIC MOTOR
CIRCUIT PERMETTANT DE FAIRE FONCTIONNER UN MOTEUR ELECTRIQUE

(30) Priorität: 09.09.1994 DE 4432059
(43) Veröffentlichungstag der Anmeldung: 25.06.1997
(73) Patentinhaber: ROBERT BOSCH GMBH, 70442 Stuttgart (DE)
(72) Erfinder: KESSLER, Martin, D-77815 Bühl (DE)
(86) Internationale Anmeldenummer: DE9501084
(87) Internationale Veröffentlichungsnummer: WO9608065

(56) Entgegenhaltungen:
- DE-A- 2 228 715
- DE-A- 3 037 877
- DE-A- 4 115 295
- DE-C- 4 129 086
- US-A- 3 551 775
- US-A- 4 541 029

## Beschreibung

### Stand der Technik

Die Erfindung geht aus von einer Schaltung zum Betreiben eines Elektromotors nach der Gattung der unabhängigen Ansprüche. Aus der DE-A 41 29 086 ist ein Verfahren zum Betreiben eines Elektromotors bekannt, bei dem die Leistung des Motors in Abhängigkeit von einer Sollwertvorgabe veränderbar ist. Wenn der Sollwert unterhalb einer vorgebbaren Schwelle, entsprechend einer niedrigen Motorleistung, liegt, wird die am Motor liegende Spannung geregelt. Wenn der Sollwert oberhalb der Schwelle, entsprechend einer höheren Motorleistung, liegt, wird der durch den Motor fließende Strom geregelt. Das bekannte Verfahren wird durch Sicherheitseinrichtungen ergänzt. Als Sicherheitseinrichtungen sind beispielsweise eine Überstromabschaltung sowie eine Kurzschlußabschaltung vorgesehen. Bei der Überstromabschaltung oder Überstrombegrenzung des durch den Elektromotor fließenden Stroms wird das von einem Stromsensor abgegebene Strom-Istwertsignal einem Überstrombegrenzer zugeführt, der das Signal mit einem intern vorgebbaren Schwellenwert vergleicht. Nach einer Schwellenüberschreitung gibt der Überstrombegrenzer ein Schaltsignal an eine Auswahlschaltung zum Unterdrücken des Steuersignals für eine Endstufe ab. Das Abschaltsignal kann auch der Motortreiberschaltung oder dem Stromregler zugeleitet werden.

Aus der DE-A 41 15 295 ist eine Schaltungsanordnung zur Steuerung und Überwachung eines in einem Laststromkreis fließenden Laststroms bekannt. Der Laststrom fließt beispielsweise durch einen Elektromotor. Zur Überwachung ist ein Überlastdetektor vorgesehen, der eine dem Laststrom proportionale Spannung mit einer dynamischen Überlastschwellenspannung vergleicht. Zur Bildung der Überlastschwellenspannung wird einerseits die Betriebsspannung des den Elektromotor und eine Endstufenschaltung enthaltenden Laststromkreises sowie ein Steuersignal herangezogen. Erreicht in einem Überlastfall die dem Laststrom proportionale Spannung die Überlastschwelle, so wird der Laststrom nicht mehr gesteuert, sondern es erfolgt eine Regelung. Die vorbekannte Schaltungsanordnung ermöglicht insbesondere die Detektion eines Kurzschlusses, bei dem der Elektromotor im unteren Kennlinienbereich betrieben wird.

Aus der US-A 3 551 775 ist eine Strombegrenzungs-Schutzschaltung für Elektromotoren bekannt, die in einem Antriebssystem eingesetzt sind. Die vorbekannte Schaltung sorgt für eine Reduzierung des durch Endstufen-Thyristoren fließenden Stroms, wenn zumindest einer der Motorströme eine vorgegebene maximale Grenze erreicht. Der Grenzwert ist fest vorgegeben. Hier kann der Fall auftreten, daß eine Begrenzung des durch den jeweiligen Elektromotors fließenden Stroms auf den fest vorgegebenen Maximalwert nicht ausreicht, um die eingesetzten Bauteile dauerhaft vor einer thermischen Überlastung zu schützen.

Der Erfindung liegt die Aufgabe zugrunde, eine Schaltung zum Betreiben eines Motors anzugeben, die insbesondere einen Schutz einer Endstufe und/oder des Elektromotors gegen eine thermische Überbeanspruchung mit einfachen Mitteln zuverlässig sicherstellt.

Die Aufgabe wird durch die in den unabhängigen Ansprüchen angegebenen Merkmale jeweils gelöst.

### Vorteile der Erfindung

Gemäß einer ersten Ausführung der erfindungsgemäßen Schaltung, bei der der durch den Elektromotor fließende Strom auf einen vorgegebenen Wert festgelegt ist, vergleicht eine Überwachungsanordnung die Motorspannung mit einem von einem Grenzwertgeber vorgegebenen Motorspannungsgrenzwert, der abhängig ist vom Motorstrom. Stellt die Überwachungsanordnung eine Unterschreitung des Motorspannungsgrenzwerts fest, so gibt die Überwachungsanordnung ein Überlastsignal aus. Mit dieser Maßnahme wird eine Anpassung des Motorspannungsgrenzwertes an unterschiedliche Betriebsverhältnisse möglich.

Gemäß einer anderen Ausführung der erfindungsgemäßen Schaltung, bei der die Motorspannung auf einen vorgegebenen Wert festgelegt ist und wobei über eine in Reihe geschaltete Endstufe die Motorspannung auf einen vorgegebenen Spannungssollwert geregelt oder gesteuert wird, vergleicht die Überwachungsanordnung den durch den Elektromotor fließenden Strom mit einem von einem Grenzwertgeber vorgegebenen Motorstromgrenzwert, der von einer zur Motorspannung proportionalen Größe abhängt. Bei einem Überschreiten des Motorstromgrenzwertes gibt die Überwachungsanordnung ein Überlastsignal ab.

Die erfindungsgemäßen Schaltungen beruhen darauf, daß die elektromotorische Gegenspannung im Motor von der Drehzahl abhängt. Bei einer Schwergängigkeit des Motors oder des mit dem Motor verbundenen Antriebs sinken die Drehzahl und somit die elektromotorische Gegenspannung ab. Die elektromotorische Gegenspannung wird zu Null bei blockiertem Elektromotor.

Beide Ausführungen der erfindungsgemäßen Schaltung weisen den Vorteil auf, daß eine Überlastung oder ein vollständiges Blockieren des Elektromotors mit elektrischen Signalen detektierbar sind, die mit einfachen Mitteln erfaßbar sind. Weitere Sensoren, wie beispielsweise ein Drehzahlsensor oder ein Temperatursensor sind nicht erforderlich.

Vorteilhafte Weiterbildungen und Ausgestaltungen der erfindungsgemäßen Schaltungen ergeben sich aus abhängigen Ansprüchen.

Eine vorteilhafte Realisierung der erfindungsgemäßen Schaltungsanordnung gemäß der ersten Ausführung sieht vor, daß anstelle des unmittelbar erfaßten Motorstroms der vorgegebene Motorstromsollwert in der Überwachungsanordnung verarbeitet wird. Mit dieser Maßnahme ist es möglich, ggf. erforderliche Pegelanpaßschaltungen einzusparen.

Eine Messung der Motorspannung, die in Abhängigkeit von der Beschaltung des Elektromotors als Differenzspannungsmessung ausgestaltet sein muß, kann mit dieser Maßnahme entfallen. Eine zur Motorspannung proportionale Größe ist beispielsweise die Motorsollspannung. Eine andere, zur Motorspannung proportionale Größe ist eine Stellgröße einer gesteuerten Spannungsquelle, die in der Ansteuerung der Endstufe enthalten ist. Die gesteuerte Spannungsquelle kann sowohl bei der Schaltung, die den durch den Elektromotor fließenden Strom vorgibt, als auch bei der Schaltung, die die Motorspannung festlegt, eingesetzt werden.

Eine vorteilhafte Weiterbildung sieht vor, daß das Überlastsignal erst nach Ablauf einer vorgebbaren Zeit von der Überwachungsanordnung ausgegeben wird. Die vorgebbare Zeit ist eine Verzögerungszeit, die das Hochlaufen des Elektromotors, ausgehend vom ausgeschalteten Zustand berücksichtigt. Der während des Hochlaufs auftretende instationäre Zustand, der zu einem irrtümlichen Ausgeben des Überlastsignals führen könnte, ist mit dieser Maßnahme beherrschbar.

Eine andere Weiterbildung sieht vor, daß das Überlastsignal den Sollwert für die Motorspannung oder den Motorstrom reduziert. Ein Betrieb des Elektromotors mit eingeschränkter Leistung ist dann trotz einer Überlastung, beispielsweise durch Schwergängigkeit, noch möglich.

Eine vorteilhafte Weiterbildung sieht vor, daß das Überlastsignal nach einer vorgegebenen Zeit unterdrückt wird. Ist der Elektromotor weiterhin überlastet, so wird das Überlastsignal wieder ausgegeben. In diesem Betrieb wird ein periodisches Einschalten des Elektromotors versucht. Die Zeiten, in denen das Überlastsignal auftritt oder unterdrückt ist, sind vorteilhafterweise derart bemessen, daß trotz einer Überlastung des Elektromotors die mittlere Leistung auf einen Wert begrenzt ist, die für den Elektromotor und/oder für die Endstufe keine Gefahr einer thermischen Überlastung darstellt.

Die erfindungsgemäßen Schaltungen zum Betreiben eines Elektromotors sind insbesondere geeignet zur Verwendung bei einem Lüfter, wobei der Ventilator gleichzeitig zur Kühlung des Elektromotors und/oder zur Kühlung der Endstufe eingesetzt ist.

Weitere Ausgestaltungen und vorteilhafte Weiterbildungen ergeben sich aus weiteren abhängigen Ansprüchen in Verbindung mit der folgenden Beschreibung.

### Zeichnung

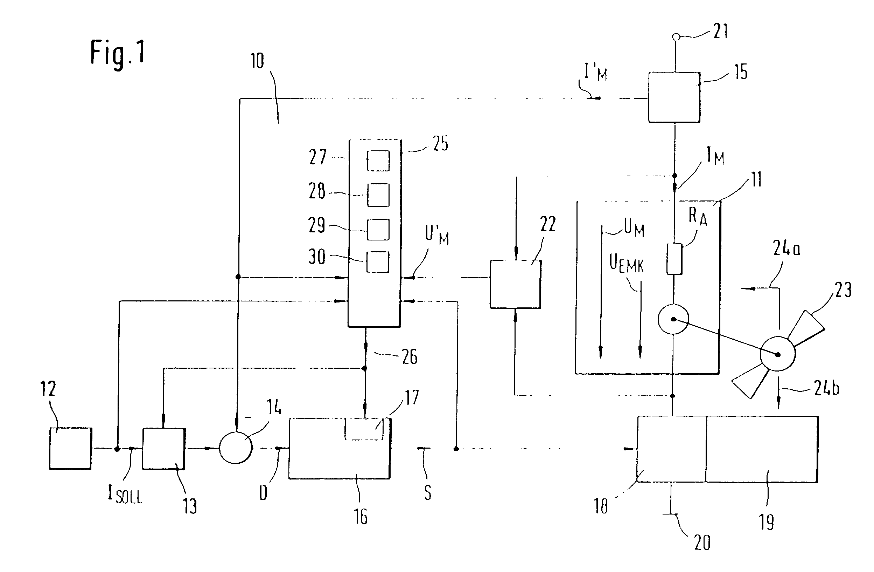

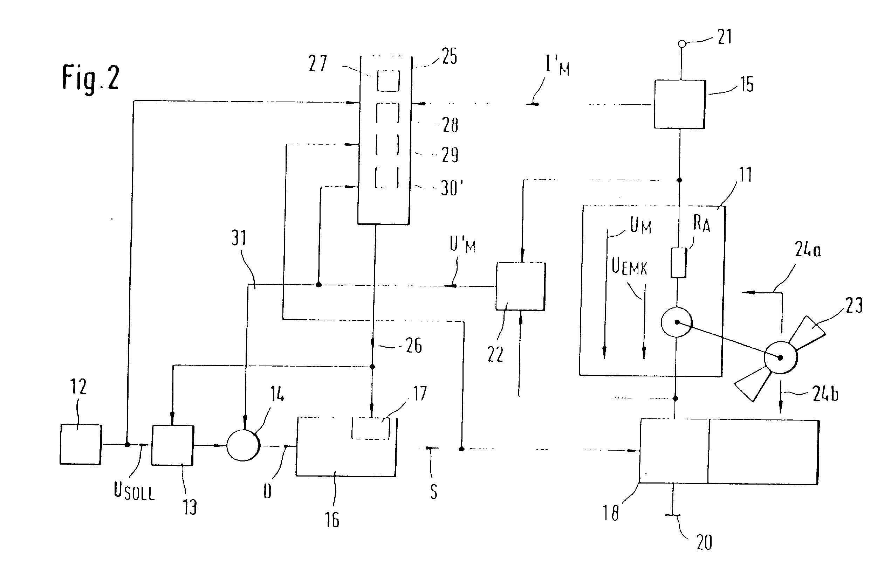

Figur 1 zeigt ein Blockschaltbild einer erfindungsgemäßen Schaltung zum Betreiben eines Elektromotors, bei der der durch den Elektromotor fließende Strom festgelegt ist und Figur 2 zeigt ein Blockschaltbild einer erfindungsgemäßen Schaltung zum Betreiben eines Elektromotors, bei der die Motorspannung festgelegt ist.

Figur 1 zeigt einen Stromregelkreis 10, der den durch einen Elektromotor 11 fließenden Strom I_{M} auf einen vorgegebenen Stromsollwert I_{SOLL} regelt. Der Stromregelkreis 10 enthält einen Sollwertgeber 12, der den Stromsollwert I_{SOLL} an einen Sollwertreduzierer 13 abgibt, der den Stromsollwert I_{SOLL} an einen Summierer 14 weiterleitet. Der Summierer 14 bildet eine Differenz zwischen dem Stromsollwert I_{SOLL} und einem Motorstromsignal I'_{M}. Das Motorstromsignal I'_{M} ist ein Maß für den Motorstrom I_{M}, das ein Stromsensor 15 bereitstellt.

Der Summierer 14 gibt eine Regelabweichung D an einen Regler 16 ab, der eine Stellgröße S ermittelt. Der Regler 16 enthält einen Stellgrößenbegrenzer 17. Die Stellgröße S gelangt in eine Endstufe 18, die mit einem Kühlkörper 19 verbunden ist. Die Endstufe 18 legt den Elektromotor 11 über einen ersten Anschluß 20 und einen zweiten Anschluß 21 an eine nicht näher gezeigte Energiequelle. Die Endstufe 18 wird mit der Stellgröße S derart gesteuert, daß der Motorstrom I_{M} dem Stromsollwert I_{SOLL} entspricht.

Der Motorstrom I_{M} führt zu einer Motorspannung U_{M}, die dem Spannungsabfall an einem Ankerwiderstand R_{A} entspricht, zu der die elektromotorische Gegenspannung U_{EMK} addiert wird. Die Motorspannung U_{M} erfaßt ein Spannungssensor 22, der ein Motorspannungssignal U'_{M} als Maß für die Motorspannung U_{M} abgibt.

Der Elektromotor 11 betätigt einen Ventilator 23, der einen ersten Luftstrom 24a in Richtung des Elektromotors 11 und einen zweiten Luftstrom 24b in Richtung des Kühlkörpers 19 der Endstufe 18 abgibt.

Der Stromsollwert I_{SOLL}, das Motorstromsignal I'_{M}, das Motorspannungssignal U'_{M} sowie die Stellgröße S werden einer Überwachungsanordnung 25 zugeleitet, die ein Überlastsignal 26 bereitstellt, das sowohl an den Sollwertreduzierer 13 als auch an den Stellgrößenbegrenzer 17 abgegeben wird. Die Überwachungsanordnung 25 enthält einen ersten, einen zweiten und einen dritten Zeitgeber 27, 28, 29. Weiterhin enthält die Überwachungsanordnung 25 einen Grenzwertgeber 30.

Die in Figur 1 gezeigte erfindungsgemäße Schaltung zum Betreiben des Elektromotors 11 arbeitet folgendermaßen:

Der durch den Elektromotor 11 fließende Motorstrom I_{M} wird vom Stromregelkreis 10 auf den vom Sollwertgeber 12 bereitgestellten Stromsollwert I_{SOLL} geregelt. Zur Durchführung der Regelaufgabe enthält der Regelkreis 10 den Summierer 14, der die Regelabweichung D aus dem Stromsollwert I_{SOLL} und dem Motorstromsignal I'_{M} ermittelt. Der Regler 16 legt in Abhängigkeit von der Regelabweichung D die Stellgröße S fest. Der Regler 16 kann als ein aus der umfangreichen regelungstechnischen Grundlagenliteratur bekannter Regler, beispielsweise als Proportional- oder als Proportional-Integralregler ausgestaltet sein. Geeignet sind sowohl analoge als auch digitale Regler. Die Stellgröße S kann ein analoges Signal sein, das der Endstufe 18 zugeleitet wird. Vorzugsweise ist die Stellgröße ein digitales impulsbreitenmoduliertes Signal, das in der Endstufe 18 einen getakteten Betrieb realisiert. Bei dem getakteten Betrieb wird in rascher zeitlicher Folge der Elektromotor 11 mit der nicht gezeigten Energiequelle verbunden oder vollständig abgeschaltet. Das Ergebnis ist eine mittlere Motorspannung U_{M}, die in Abhängigkeit von der durch den Ventilator 23 gegebenen Last zu dem gewünschten Motorstrom I_{M} führt. Die Endstufe 18 kann als gesteuerte Spannungsquelle bezeichnet werden, die die Motorspannung U_{M} variabel auf einen Wert festlegt, bei dem der Motorstrom T_{M} mit dem Stromsollwert I_{SOLL} wenigstens näherungsweise übereinstimmt.

Der getaktete Betrieb der Endstufe 18 mit der Impulsbreitensteuerung ermöglicht die Auslegung der Endstufe 18 für einen Schaltbetrieb, der eine minimale Verlustleistung in der Endstufe 18 ermöglicht, die über den Kühlkörper 19 abgeführt werden muß.

Der Motorstrom I_{M} wird von einem geeigneten Stromsensor 15 erfaßt. Bei kleineren Strömen, beispielsweise bei Strömen von einigen Ampere kann ein ohmscher Meßwiderstand eingesetzt werden. Bei größeren Strömen sind andere Sensoren besser geeignet, die beispielsweise das den Motorstrom I_{M} begleitende Magnetfeld erfassen. Solche Sensoren sind beispielsweise Hallelemente, magnetoresistive Elemente oder induktive Sensoren. Ein Maß für den Motorstrom I_{M} ist auch ein Spannungsabfall an einem Bauelement in der Endstufe.

Der Stromregelkreis 10 ermöglicht das Bereitstellen eines wenigstens näherungsweise konstanten Drehmoments des Elektromotors 11. Ein konstantes Drehmoment hat insbesondere bei einem Lüfter mit dem Ventilator 23 den Vorteil, daß ein wenigstens näherungsweise konstanter Luftdurchsatz realisierbar ist. Auch in anderen Verwendungen spielt der Motorstrom I_{M} die wesentliche Rolle wegen des direkten Bezugs zum Drehmoment. Bei einem gegebenen Motorstrom I_{M} kann ein Blockieren des Elektromotors 11 oder eine Schwergängigkeit durch eine Abnahme der Motorspannung U_{M} erkannt werden. Eine Schwergängigkeit oder ein vollständiges Blockieren des Elektromotors reduziert die elektromotorische Gegenspannung U_{EMK}, die bei blockiertem Elektromotor 11 zu Null wird.

Vorgesehen ist die Überwachungsanordnung 25, die das Motorspannungssignal U'_{M} mit dem vom Grenzwertgeber 30 vorgegebenen Motorspannungsgrenzwert vergleicht.

Unterschreitet das Motorspannungssignal U'_{M} den vorgegebenen Motorspannungsgrenzwert, dann gibt die Überwachungsanordnung 25 das Überlastsignal 26 aus. Das Überlastsignal 26 kann beispielsweise ein Warnsignal auslösen. Im gezeigten Ausführungsbeispiel gemäß Figur 1 kann das Überlastsignal 26 beispielsweise den vom Sollwertgeber 12 vorgegebenen Stromsollwert I_{SOLL} im Sollwertreduzierer 13 um einen vorgegebenen Betrag absenken oder vollständig zu Null machen. Ebenso ist es möglich, daß das Überlastsignal 26 beispielsweise die Stellgröße S des Reglers 16 mit dem im Regler 16 enthaltenen Stellgrößenbegrenzer 17 um einen vorgegebenen Betrag reduziert oder vollständig auf Null absenkt.

Vorgesehen ist, daß der vom Grenzwertgeber 30 bereitgestellte Motorspannungsgrenzwert in Abhängigkeit vom Motorstrom I_{M} festgelegt ist. Der Überwachungsanordnung 25 ist deshalb gemäß einem ersten Ausführungsbeispiel das Motorstromsignal I'_{M} zugeleitet. Alternativ zum Motorstromsignal I'_{M} kann der Überwachungsanordnung 25 gemäß einem anderen Ausführungsbeispiel der Stromsollwert I_{SOLL} zugeleitet werden. Zumindest im stationären Betriebszustand ist der Stromsollwert I_{S} proportional oder wenigstens näherungsweise proportional dem Motorstromsignal I'_{M}. In Abhängigkeit von der schaltungstechnischen Realisierung kann es zweckmäßig sein, anstelle des Motorstromsignals I'_{M} den Stromsollwert I_{SOLL} zu verwenden. Dies ist beispielsweise dann der Fall, wenn die beiden Signale I_{SOLL}, I'_{M} auf einem unterschiedlichen Potential liegen, so daß gegebenenfalls Potentialanpaßschaltungen erforderlich wären.

Eine andere, besonders vorteilhafte Ausgestaltung sieht vor, daß der Überwachungsanordnung 25 anstelle des Motorspannungssignals U'_{M} die Stellgröße S zugeleitet wird. Der Wegfall des Spannungssensors 22 ist besonders günstig, weil in Abhängigkeit von der schaltungstechnischen Realisierung eine Differenzspannungsmessung wie im gezeigten Ausführungsbeispiel erforderlich ist. Anstelle des Motorspannungssignals U'_{M} soll daher eine zur Motorspannung U_{M} proportionale Größe zum Vergleich herangezogen werden. Beispielsweise ist die Stellgröße S eine solche Größe, da mit einer Schwergängigkeit oder mit einem vollständigen Blockieren eine Abnahme der Motorspannung U_{M} durch eine Reduzierung oder durch den Wegfall der elektromotorischen Gegenspannung U_{EMK} verbunden ist. Die Endstufe 18 muß daher eine geringere Motorspannung U_{M} in Abhängigkeit von der Stellgröße S vorgeben, um den Motorstrom I_{M} auf dem vorgegebenen Stromsollwert I_{SOLL} zu halten. Mit der Motorspannung U_{M} nimmt daher auch die Stellgröße S ab.

Der erste Zeitgeber 27 der Überwachungsanordnung 25 ist auf eine Zeit festgelegt, die dem Hochlaufen des Elektromotors 11 vom Stillstand bis zum vorgegebenen Nennbetrieb, bei dem der vorgegebene Motorstrom I_{SOLL} erreicht wird, entspricht. Während der vom ersten Zeitgeber 27 vorgegebenen Zeit wird die Ausgabe des Überlastsignals 26 unterdrückt. Das Einschalten des Elektromotors 11 erkennt der erste Zeitgeber 27 durch eine erstmalige Vorgabe einer von Null abweichenden Sollstromvorgabe.

Der zweite und der dritte Zeitgeber 28, 29 ermöglichen einen periodisch wiederkehrenden Inbetriebnahmeversuch des Elektromotors 11 trotz eines festgestellten Überlastzustandes. Der zweite Zeitgeber 28 startet beispielsweise gleichzeitig mit dem Auftreten des Überlastsignals 26. Die vom zweiten Zeitgeber 28 festgelegte Zeit legt somit die Abschaltzeit des Elektromotors 11 oder die Zeit der reduzierten Leistung fest. Nach Ablauf der vom zweiten Zeitgeber 28 vorgegebenen Zeit wird in der vom dritten Zeitgeber 29 vorgegebenen Zeit das Überlastsignal 26 unterdrückt. In der vom dritten Zeitgeber 29 vorgegebenen Zeit wird daher versucht, den Nennbetrieb des Elektromotors 11 aufzunehmen. Ein vorübergehender Blockierzustand oder eine vorübergehende Schwergängigkeit werden mit dieser Maßnahme erkannt. Durch die Festlegung von der vom dritten Zeitgeber 29 vorgegebenen Einschaltzeit und der vom zweiten Zeitgeber 28 vorgegebenen Abschaltzeit oder der Zeit mit reduzierter Leistung kann erreicht werden, daß eine thermische Überlastung sowohl des Elektromotors 11 als auch der vom Kühlkörper 19 gekühlten Endstufe 18 auch im dauerhaft gestörten Betrieb bei Überlast innerhalb vorgegebener Grenzen bleibt.

Eine bevorzugte Verwendung der erfindungsgemäßen Schaltung zum Betreiben des Elektromotors 11 ist bei einem Lüfter gegeben, der vorzugsweise in einem Kraftfahrzeug angeordnet ist und dort zur Innenraumbelüftung dient. Der Einsatz des Stromregelkreises 11 weist, insbesondere im höheren Leistungsbereich, Vorteile gegenüber einer Spannungssteuerung auf, die im einzelnen im eingangs genannten Stand der Technik erläutert sind. Die Vorgabe des durch den Elektromotor 11 fließenden Stroms I_{M} legt das vom Elektromotor 11 bereitgestellte Drehmoment wenigstens näherungsweise auf einen vorgegebenen Wert fest. Der stromgeregelte Betrieb des Elektromotors 11 hat bei einer Veränderung des Staudrucks am Lüfter nur eine vergleichsweise geringe Änderung des Luftdurchsatzes zur Folge. Die besondere Eignung für einen Lüfter, insbesondere einen Lüfter, der in einem Kraftfahrzeug angeordnet ist, folgt daraus unmittelbar.

Eine Weiterbildung der erfindungsgemäßen Verwendung bei einem Lüfter sieht vor, daß die Endstufe 18 und/oder der Elektromotor 11 vom Luftstrom 24a, 24b des Ventilators 23 selbst gekühlt werden. Mit dieser Maßnahme ist es möglich, eine preisgünstige Endstufe 18 vorzusehen, deren zulässige Dauerverlustleistung einen geringen Wert aufweisen kann als eine Endstufe 18, die ohne zusätzliche Kühlung auskommen muß. Bei dieser Weiterbildung ist es wesentlich, daß bei einer Schwergängigkeit des Elektromotors 11 oder bei einem vollständigen Blockieren des Elektromotors 11 der Motorstrom I_{M} in der Endstufe 18 und somit deren Verlustleistung nach dem Wegfall der zusätzlichen Kühlung durch den Ventilator 23 reduziert wird.

Anstelle des in Figur 1 gezeigten Stromregelkreises 10 ist auch eine Stromsteuerung möglich. Der Summierer 14 sowie der Regler 16 können dann entfallen. Die Sollwertvorgabe 12 gibt in dieser Ausgestaltung den Stromsollwert I_{SOLL} unmittelbar als Stellgröße S an die Endstufe 18 ab. Der Stromsollwert I_{SOLL} ist beispielsweise ein impulsbreitenmoduliertes Signal, das die als gesteuerte Spannungsquelle geschaltete Endstufe 18 zum Vorgeben einer mittleren Motorspannung U_{M} veranlaßt. Erforderlich bei dieser Ausgestaltung sind weiterhin der Stromsensor 15 sowie der Spannungssensor 22, weil die Stellgröße S bei dieser Ausgestaltung bei einer Überlastung des Elektromotors 11 nicht abnimmt.

Als Endstufe 18 ist beispielsweise ein Transistor, vorzugsweise ein Feldeffekttransistor geeignet. Bei einem Bipolartransistor ist die Stellgröße im analogen Betrieb ein Steuerstrom, der in die Basis fließt. Bei einem Feldeffekttransistor ist die Stellgröße S eine Steuerspannung, die das Gate beaufschlagt. Innerhalb eines getakteten Betriebs ist in allen Fällen eine impulsbreitenmodulierte digitale Stellgröße S vorgesehen.

Figur 2 zeigt eine Ausführung der erfindungsgemäßen Schaltung zum Betreiben des Elektromotors 11, die die Motorspannung U_{M} vorgibt. Diejenigen Teile in Figur 2, die mit den in Figur 1 gezeigten Teilen übereinstimmen, tragen jeweils dieselben Bezugszeichen. Der wesentliche Unterschied liegt darin, daß anstelle des in Figur 1 gezeigten Stromregelkreises 10 ein Spannungsregelkreis 31 vorgesehen ist. Der Sollwertgeber gibt entsprechend einen Spannungssollwert U_{SOLL} ab, den die Motorspannung U_{M} annehmen soll. Dem Summierer 14 wird anstelle des Motorstromsignals I'_{M} gemäß Figur 1 nunmehr das Motorspannungssignal U'_{M} zugeleitet. Der Stromsensor 15 ist zum Bereitstellen des Motorstromsignals I'_{M} vorgesehen, das in der Überwachungsanordnung 25 mit einem von einem Grenzwertgeber 30' vorgegebenen Motorstromgrenzwert verglichen wird, wobei der Motorstromgrenzwert in Abhängigkeit von der Motorspannung U_{M} festgelegt ist.

Anstelle des Motorspannungssignals U'_{M}, das vom Spannungssensor 22 ermittelt wird, kann auch bei dieser Ausführung der erfindungsgemäßen Schaltung zum Betreiben des Elektromotors 11 anstelle der erfaßten Motorspannung U_{M} eine zur Motorspannung U_{M} proportionale Größe eingesetzt werden. Solche Größen sind der Spannungssollwert U_{SOLL} sowie die am Regler 16 auftretende Stellgröße S. Der Spannungsregelkreis 31 kann ersetzt sein durch eine Steuerung der Motorspannung U_{M}, bei der der Summierer 14 sowie der Regler 16 entfallen. Die Stellgröße S ist dann unmittelbar aus dem Spannungssollwert U_{SOLL} abgeleitet oder identisch mit dem Spannungssollwert U_{SOLL}. Die Ausgestaltung der Endstufe 18 gemäß Figur 2 stimmt mit der Ausgestaltung der Endstufe 18 gemäß Figur 1 überein. Weiterhin stimmt die zeitliche Steuerung mit den Zeitgebern 27, 28, 29 in der Überwachungsanordnung 25 in beiden Ausführungen überein.

## Patentansprüche

1. Schaltung zum Betreiben eines Elektromotors (11), bei der der durch den Elektromotor (11) fließende Strom vorgegeben ist, mit einer Überwachungsanordnung (25) zum Feststellen eines Überlastzustandes des Elektromotors (11), wobei die Überwachungsanordnung (25) die Motorspannung (U_{M}) mit einem von einem Grenzwertgeber (30) vorgegebenen Motorspannungsgrenzwert vergleicht und bei einer Unterschreitung des Motorspannungsgrenzwertes ein Überlastsignal (26) ausgibt, dadurch gekennzeichnet, daß der Motorspannungsgrenzwert abhängt vom Motorstrom (I_{M}).

2. Schaltung nach Anspruch 1, dadurch gekennzeichnet, daß der Motorspannungsgrenzwert anstelle vom Motorstrom (I_{M}) vom Stromsollwert (I_{SOLL}) abhängt.

3. Schaltung zum Betreiben eines Elektromotors (11), bei der die Motorspannung (U_{M}) vorgegeben ist, wobei über eine in Reihe geschaltete Endstufe (18) die Motorspannung auf einen vorgegebenen Spannungssollwert (U_{SOLL}) geregelt oder gesteuert wird, mit einer Überwachungsanordnung (25) zum Feststellen eines Überlastzustandes des Elektromotors (11), die den Motorstrom (I_{M}) mit einem von einem Grenzwertgeber (30) vorgegebenen Motorstromgrenzwert vergleicht und bei Überschreitung des Motorstromgrenzwerts ein Überlastsignal (26) ausgibt, dadurch gekennzeichnet, daß der vom Grenzwertgeber (30) bereitgestellte Motorstromgrenzwert von einer zu dieser geregelten oder gesteuerten Motorspannung (U_{M}) proportionalen Größe abhängt.

4. Schaltung nach Anspruch 3, dadurch gekennzeichnet, daß als zur Motorspannung (U_{M}) proportionale Größe der Spannungssollwert (U_{SOLL}) vorgesehen ist.

5. Schaltung nach Anspruch 3, dadurch gekennzeichnet, daß als zur Motorspannung (U_{M}) proportionale Größe die Motorspannung (U_{M}) vorgesehen ist.

6. Schaltung nach Anspruch 1 oder 3, dadurch gekennzeichnet, daß in der Überwachungsanordnung (25) ein erster Zeitgeber (27) vorgesehen ist, der den Hochlaufvorgang des Elektromotors (11), ausgehend vom abgeschalteten Zustand berücksichtigt durch Unterdrücken des Überlastsignals (26).

7. Schaltung nach Anspruch 1 oder 3, dadurch gekennzeichnet, daß das Überlastsignal (26) den Sollwert (I_{SOLL}, U_{SOLL}) reduziert.

8. Schaltung nach Anspruch 7, dadurch gekennzeichnet, daß der vom Sollwertgeber (12) vorgegebene Sollwert (I_{SOLL}, U_{SOLL}) auf Null reduziert wird.

9. Schaltung nach Anspruch 1 oder 3, dadurch gekennzeichnet, daß ein zweiter Zeitgeber (28) vorgesehen ist, der das Überlastsignal (26) für die vom zweiten Zeitgeber (28) vorgegebene Zeit ausgibt, und daß ein dritter Zeitgeber (29) vorgesehen ist, der eine Zeit vorgibt, während der das Überlastsignal (26) unterdrückt ist.

10. Schaltung nach Anspruch 9, dadurch gekennzeichnet, daß die von den beiden Zeitgebern (28, 29) vorgegebenen Zeiten periodisch auftreten wird, derart bemessen sind, daß eine thermische Überlastung des Elektromotors (11) und/oder der Endstufe (18) ausgeschlossen ist.

11. Schaltung nach Anspruch 1 oder 3, gekennzeichnet durch die Verwendung bei einem Lüfter, wobei der Ventilator (23) des Lüfters den Elektromotor (11) und/oder die Endstufe (18) über Luftströme (24a, 24b) kühlt.

## Claims

1. Circuit for operating an electric motor (11), in which circuit the current flowing through the electric motor (11) is predetermined, having a monitoring arrangement (25) for detecting an overload state of the electric motor (11), the monitoring arrangement (25) comparing the motor voltage (U_{M}) with a motor voltage limit value predetermined by a limit value generator (30) and in the case of a dropping below the motor voltage limit value outputs an overload signal (26), characterized in that the motor voltage limit value depends on the motor current (I_{M}).

2. Circuit according to Claim 1, characterized in that the motor voltage limit value depends on the nominal current value (I_{SOLL}) instead of on the motor current (I_{M}).

3. Circuit for operating an electric motor (11), in which circuit the motor voltage (U_{M}) is predetermined, the motor voltage being controlled for a predetermined nominal voltage value (U_{SOLL}) via a series-connected output stage (18), comprising a monitoring arrangement (25) for detecting an overload state of the electric motor (11) which compares the motor current (I_{M}) with a motor current limit value predetermined by a limit value generator (30) and in the case of a dropping below the motor current limit value outputs an overload signal (26), characterized in that the motor current limit value provided by the limit value generator (30) depends on a magnitude which is proportional to this controlled first motor voltage (U_{M}).

4. Circuit according to Claim 3, characterized in that the nominal voltage value (U_{SOLL}) is provided as the magnitude proportional to the motor voltage (U_{M}).

5. Circuit according to Claim 3, characterized in that the motor voltage (U_{M}) is provided as the magnitude proportional to the motor voltage (U_{M}).

6. Circuit according to Claim 1 or 3, characterized in that in the monitoring arrangement (25), a first timer (27) is provided which, by suppressing the overload signal (26), takes into consideration the acceleration process of the electric motor (11) starting from the switched-off state.

7. Circuit according to Claim 1 or 3, characterized in that the overload signal (26) reduces the nominal value (I_{SOLL}, U_{SOLL}).

8. Circuit according to Claim 7, characterized in that the nominal value (I_{SOLL}, U_{SOLL}) predetermined by the nominal-value generator (12) is reduced to zero.

9. Circuit according to Claim 1 or 3, characterized in that a second timer (28) is provided which outputs the overload signal (26) for the time predetermined by the second timer (28), and in that a third timer (29) is provided which predetermines a time during which the overload signal (26) is suppressed.

10. Circuit according to Claim 9, characterized in that the times predetermined by the two timers (28, 29) are dimensioned in such a manner that thermal overloading of the electric motor (11) and/or of the output stage (18) is impossible.

11. Circuit according to Claim 1 or 3, characterized by its use in a fan, the paddle (23) of the fan cooling the electric motor (11) and/or the output stage (18) via air currents (24a, 24b).

## Revendications

1. Circuit de mise en oeuvre d'un moteur électrique (11) dont l'intensité du courant traversant le moteur électrique (11) est prédéterminée, circuit comprenant :
- un dispositif de surveillance (25) pour déterminer un état de surcharge du moteur électrique (11),
- le dispositif de surveillance (25) comparant la tension du moteur (U_{M}) à une valeur limite de tension prédéterminée du moteur par un générateur de valeur limite (30) et en cas de dépassement vers le bas de la valeur limite de la tension du moteur il émet un signal de surcharge (26),
caractérisé en ce que
la valeur limite de la tension du moteur dépend du courant du moteur (I_{M}).

2. Circuit selon la revendication 1,
caractérisé en ce que
la valeur limite de la tension du moteur dépend non pas du courant dans le moteur (I_{M}) mais d'une valeur de consigne du courant (I_{CONS}).

3. Circuit de mise en oeuvre d'un moteur électrique 11 dont la tension (U_{M}) du moteur est prédéterminée, et la tension du moteur est régulée ou commandée à une valeur de tension (U_{CONS}) déterminée par un étage final (18) branché en série, circuit comprenant :
un dispositif de surveillance (25) pour déterminer un état de surcharge du moteur électrique (11), qui compare l'intensité du courant dans le moteur (I_{M}) à une valeur limite de courant du moteur, prédéterminée par un générateur de valeur limite (30) et en cas de dépassement de la valeur limite du courant du moteur, il émet un signal de surcharge (26),
caractérisé en ce que
la valeur limite du courant du moteur fournie par le générateur de valeur limite (30) dépend d'une grandeur proportionnelle à cette tension régulée ou commandée (U_{M}) du moteur.

4. Circuit selon la revendication 3,
caractérisé en ce que
la grandeur proportionnelle à la tension (U_{M}) du moteur est la valeur de consigne de tension (U_{CONS}).

5. Circuit selon la revendication 3,
caractérisé en ce que
la grandeur proportionnelle à la tension (U_{M}) du moteur est la tension (U_{M}) du moteur.

6. Circuit selon la revendication 1 ou 3,
caractérisé par
une première horloge (27), prévue dans le dispositif de surveillance (25), qui tient compte de la phase de montée en vitesse du moteur électrique (11) à partir de l'état coupé du courant en supprimant le signal de surcharge (26).

7. Circuit selon la revendication 3,
caractérisé en ce que
le signal de surcharge (26) réduit la valeur de consigne (I_{CONS}, U_{CONS}).

8. Circuit selon la revendication 7,
caractérisé en ce que
la valeur de consigne (I_{CONS}, U_{CONS}) prédéterminée par le générateur de valeur de consigne (12) est réduite à zéro.

9. Circuit selon la revendication 1 ou 3,
caractérisé par
une seconde horloge (28) qui émet le signal de surcharge (26) pour la durée prédéterminée par la seconde horloge (28) et
- une troisième horloge (29) prédétermine une durée pendant laquelle le signal de surcharge (26) est éliminé.

10. Circuit selon la revendication 9,
caractérisé en ce que
les durées prédéterminées par les deux horloges (28, 29) arrivent de manière périodique et elles sont dimensionnées pour exclure toute surcharge thermique du moteur électrique (11) et/ou de l'étage final (18).

11. Circuit selon la revendication 1 ou 3,
caractérisé par
l'application à une machine soufflante selon laquelle le ventilateur (23) de la machine soufflante refroidit le moteur électrique (11) et/ou l'étage final (18) par des courants d'air (24a, 24b).
